# EUROPÄISCHE PATENTANMELDUNG

(11) **EP 0 532 923 A1**
(43) Veröffentlichungstag der Anmeldung: **24.03.1993**
(21) Anmeldenummer: 92114048.9
(22) Anmeldetag: 18.08.1992
(51) Int. Cl.: B65G 51/00, A23L 3/02

(54) **Vorrichtung zum hydraulischen Transport von Körpern in einer Rohrleitung**

(30) Priorität: 17.09.1991 DE 4130852
(71) Anmelder: Bolz, Alfred, D-88239 Wangen (DE)
(72) Erfinder: Bolz, Alfred, D-88239 Wangen (DE)
(74) Vertreter: Knoblauch, Ulrich, Dr.-Ing., Patentanwälte Dr. Knoblauch

(57) **Zusammenfassung**

Eine Vorrichtung zum hydraulischen Transport von Körpern (K), wie Kapseln, in einer Rohrleitung weist einen Strahlapparat mit Diffusor (4) auf. Dieser ist von einer Führung (13) für die Körper (K) durchsetzt, welche Öffnungen (Ausschnitte 16, 17, 21, 22) aufweist. Die Querschnitte der Öffnungen in der Führung (13) sind verstellbar. Die Verstellung kann durch ein außerhalb des Diffusors (4) angeordnetes Betätigungselement (24) erfolgen.

## Beschreibung

Die Erfindung bezieht sich auf eine Vorrichtung zum hydraulischen Transport von Körpern, wie Kapseln, in einer Rohrleitung, mit einem Strahlapparat, dessen Diffusor von einer mit Öffnungen versehenen Führung für die Körper durchsetzt ist.

Eine solche Vorrichtung ist aus EP-B1-0 139 780 bekannt. Sie dient dazu, Körper von definierter Gestalt einer Druck- und/oder Wärmebehandlung zu unterwerfen. Beispielsweise handelt es sich um Kunststoffkörper, die polymerisiert werden sollen, oder um Kapseln oder andere Behältnisse, die zu sterilisierende oder pasteurisierende Lebensmittel enthalten. Der Strahlapparat hat die Aufgabe, die Körper von einem Rohrleitungsabschnitt geringeren Drucks in einen Rohrleitungsabschnitt höheren Drucks zu transportieren. Zu diesem Zweck wird Treibflüssigkeit, die von einer Treibmittelpumpe gefördert wird, im Bereich einer Engstelle in die die Körper fördernde Transportflüssigkeit gestrahlt, so daß die Körper die Engstelle mit hoher Geschwindigkeit, beispielsweise der drei- bis vierfachen Transportgeschwindigkeit, durchlaufen. Die Geschwindigkeit der Flüssigkeitsströmung verringert sich im Diffusor. Die Öffnungen in der Führung haben die Aufgabe, die Flüssigkeitsströmung und damit auch die Geschwindigkeit der Körper gleichmäßig zu verzögern.

Die Strahlapparate werden für einen bestimmten Betriebspunkt dimensioniert. Ändern sich jedoch die Betriebsbedingungen, z.B. die Viskosität der Transportflüssigkeit, die Temperatur der Transportflüssigkeit, die geometrische Form bzw. der Umströmungswiderstand der zu transportierenden Körper, die gewünschte Transportgeschwindigkeit, der gewünschte Betriebsdruck o.dgl., ergibt sich ein unstetes Durchlaufverhalten der Körper. Beispielsweise kommen sie schnell an und werden spontan stark abgebremst oder sie werden plötzlich beschleunigt. All dies führt dazu, daß die Körper im Bereich des Diffusors aufeinander stoßen, was sowohl akustisch stört als auch zu wertmindernden Beschädigungen oder Markierungen an den Körpern führen kann. Veränderungen der Menge der Treibflüssigkeit durch eine Verstellung der Pumpe führen nicht zu einer wesentlichen Besserung. Denn der Größtdurchmesser des Diffusors ist bei kleinen Treibflüssigkeitsmengen zu groß und bei großen Treibflüssigkeitsmengen zu klein.

Der Erfindung liegt die Aufgabe zugrunde, eine Vorrichtung der eingangs beschriebenen Art derart zu verbessern, daß die Körper auch bei Änderungen der Betriebsbedingungen den Diffusor mit gleichförmiger Verzögerung durchlaufen.

Diese Aufgabe wird erfindungsgemäß dadurch gelöst, daß die Querschnitte der Öffnungen in der Führung verstellbar sind.

Auf diese Weise läßt sich die Flüssigkeitsmenge innerhalb der Führung, welche für die Transportgeschwindigkeit der Körper wesentlich ist steuern. Erhöht sich beispielsweise die Viskosität der Flüssigkeit, dann wird für dieselbe Transportgeschwindigkeit eine größere Voreilung der Transportflüssigkeit benötigt als bei niedrigerer Viskosität. In diesem Fall werden die flüssigkeitsdurchlässigen Öffnungen in der Führung verkleinert. Dasselbe gilt dann, wenn ein geringerer Betriebsdruck vorgesehen wird und deshalb die Menge der Treibflüssigkeit verkleinert wird. Insgesamt läßt sich die Größe der Öffnungen den geforderten Geschwindigkeitsverhältnissen genau anpassen. Auf jeden Fall läßt es sich erreichen, daß das Laufverhalten der Körper im Diffusor selbst bei stark veränderlichen Betriebsbedingungen gleichmäßig gut ist. Dabei ist es besonders wichtig, daß die Körper in einem weiten Betriebsbereich nicht aufeinander prallen.

Konstruktiv empfiehlt es sich, daß die Führung mit Ausschnitten versehene Wände aufweist und ein verstellbarer Schieber zum teilweisen Abdecken der Ausschnitte vorgesehen ist. Es genügt ein Schieber für eine Anzahl von Öffnungen oder sogar für alle Öffnungen. Außerdem dient die Führung selbst als Bahn für den Schieber.

Besonders vorteilhaft ist es, daß Ausschnitte der Führung in Strömungsrichtung hintereinander angeordnet sind und der Schieber eine Reihe gleichartiger Ausschnitte aufweist. Wenn die Öffnungen miteinander ausgerichtet sind, ergibt sich bei allen Öffnungen der größtmögliche Querschnitt. Er kann dann beliebig verkleinert werden.

In weiterer Ausgestaltung ist dafür gesorgt, daß die Ausschnitte auf einander gegenüberliegenden Seiten der Führung vorgesehen sind und ein gemeinsamer Schieber diese Seiten übergreift. Hierdurch wird die Zahl der Öffnungen vergrößert, trotzdem aber nur ein Schieber benötigt.

Besonders günstig ist eine Verstellvorrichtung, deren Betätigungselement an der Außenseite des Strahlapparats angeordnet und über eine Abdichtung mit dem Verstellmechanismus verbunden ist. Der Strahlapparat braucht daher nicht jeweils geöffnet zu werden. Vielmehr kann die Verstellung von außen erfolgen. Es ist leicht möglich, mehrere Einstellungen nacheinander vorzusehen, um den optimalen Betriebspunkt zu erfassen.

Konstruktiv kann der Schieber mit einer Zahnstange versehen und mittels eines Ritzels verstellbar sein. Auf diese Weise läßt sich eine Drehbewegung leicht in die Axialbewegung des Schiebers umsetzen.

Die Erfindung wird nachstehend anhand eines in der Zeichnung dargestellten Ausführungsbeispiels näher erläutert.
Es zeigen:
- Fig. 1: einen erfindungsgemäß verwendbaren Strahlapparat mit Treibflüssigkeits-Kreislauf,
- Fig. 2: einen Querschnitt durch den Diffusor gemäß der Linie A-A in Fig. 1,
- Fig. 3: einen Längsschnitt durch die Mitte des Diffusors und
- Fig. 4: eine Draufsicht auf die Führung bei aufgeschnittenem Diffusor.

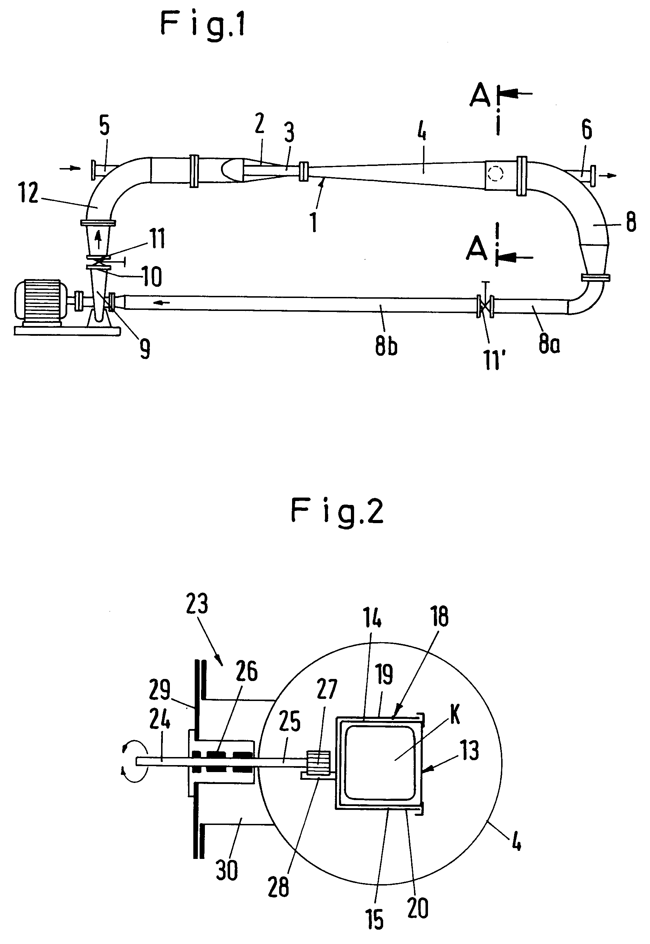

Fig. 1 zeigt einen Strahlapparat 1, der in Strömungsrichtung nacheinander eine Fangdüse 2, ein Mischrohr 3 und einen Diffusor 4 aufweist. Transportflüssigkeit und Körper treten entsprechend den Pfeilen beim Rohrleitungsanschluß 5 in den Strahlapparat 1 ein und beim Rohrleitungsanschluß 6 aus ihm aus. Während des Durchlaufs gelangen die Körper von einer Zone niedrigeren Drucks in eine Zone höheren Drucks. Der Druckaufbau erfolgt dabei in bekannter Weise gemäß der Wirkungsweise solcher Strahlapparate durch Impulsaustausch innerhalb des Mischrohres 3. Zu diesem Zweck wird Flüssigkeit am Ende des Strahlapparates 1 entnommen, über eine Ansaugleitung 8 einer motorisch angetriebenen Pumpe 9 zugeführt und von dieser auf ein höheres Druckniveau gefördert. Die Druckseite 10 der Pumpe 9 ist mit einer Absperrarmatur 11 versehen; eine weitere Absperrarmatur 11' befindet sich in der Ansaugleitung 8 und unterteilt diese in die Teilstrecken 8a und 8b. Von der Druckseite 10 gelangt die Treibmittelflüssigkeit über einen Umlenkbogen 12 zur Fangdüse 2. Durch die Auslaßöffnungen der Fangdüse 2 tritt die Treibflüssigkeit mit hoher Geschwindigkeit aus und vermischt sich anschließend in dem eine Engstelle bildenden Mischrohr 3 mit der angesaugten Transportflüssigkeit. Hierbei findet ein Impulsaustausch statt, welcher in Transportrichtung einen Druck aufbaut. Am Ende des Mischrohres 3 erreicht der Druck seinen höchsten Wert. Der Diffusor 4 hat die Aufgabe, die Flüssigkeitsströmung zu verzögern, so daß die Körper mit ihrer normalen Transportgeschwindigkeit über den Rohrleitungsanschluß 6 austreten.

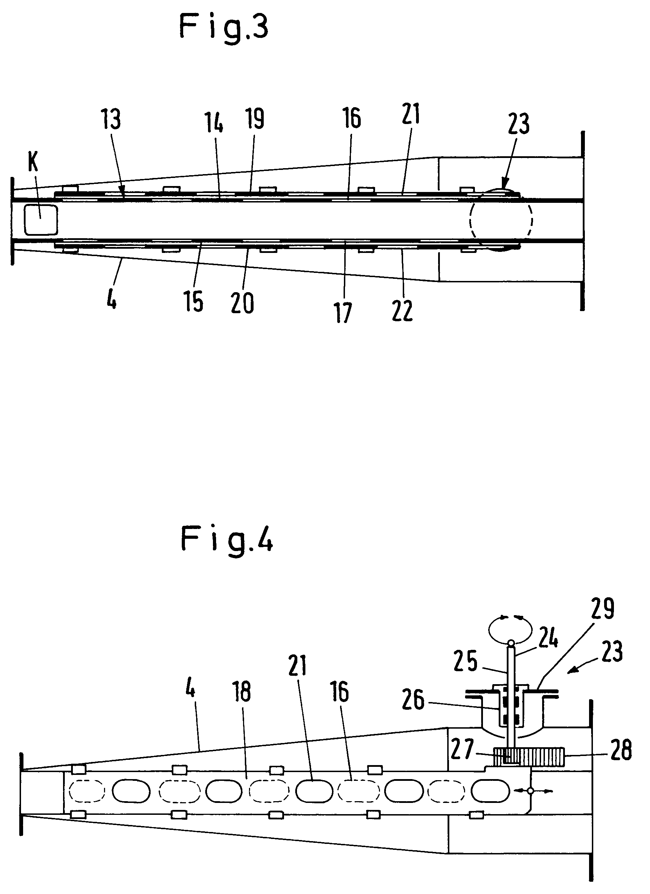

Wie die Fig. 2 bis 4 zeigen, befindet sich innerhalb des Diffusors 4 eine Führung 13 in Form eines Rohres mit quadratischem Querschnitt, das geradlinig durch den gesamten Diffusor 4 hindurchläuft. Im Innern dieses Rohres werden die Körper K transportiert. Ihre Geometrie ist derjenigen der Führung 13 angepaßt; sie werden daher mit Spiel im Rohr der Führung 13 geführt.

In der oberen Wand 14 und in der unteren Wand 15 der Führung 13 befinden sich Ausschnitte 16 bzw. 17. Die Führung 13 wird an drei Seiten von einem Schieber 18 umgriffen, der in seiner oberen Wand 19 und in seiner unteren Wand 20 Ausschnitte 21 bzw. 22 aufweist, welche in Form und Abstand den Ausschnitten 16 und 17 entsprechen. Durch eine Axialbewegung des Schiebers 18 ergeben sich Überlappungsbereiche und damit verstellbare Öffnungsquerschnitte.

Eine Verstellvorrichtung 23 weist ein äußeres Betätigungselement 24 in Form eines Drehknopfes auf, dessen Achse 25 durch eine Abdichtung 26 in Form einer Stopfbuchse in das Innere des Diffusors 4 geführt ist. Die Achse 25 trägt ein Ritzel 27, das mit einer Zahnstange 28 am Schieber 18 kämmt. Wird daher das Betätigungselement 24 von außen gedreht, verschiebt sich der Schieber 18 in Längsrichtung. Die Abdichtung 26 ist in einen Deckel 29 eingelassen. Der ganze Verstellmechanismus ist in einem Kasten 30 untergebracht, der mit dem Diffusor 4 fest verschweißt ist.

Von der dargstellten Ausführungsform kann in vielfacher Hinsicht abgewichen werden, ohne den Grundgedanken der Erfindung zu verlassen. Beispielsweise kann bei einer Führung mit kreisförmigem Querschnitt der Schieber auch als Rohr ausgebildet sein und die Öffnungsquerschnitte durch Verdrehen verstellen.

## Patentansprüche

1. Vorrichtung zum hydraulischen Transport von Körpern, wie Kapseln, in einer Rohrleitung, mit einem Strahlapparat, dessen Diffusor von einer mit Öffnungen versehenen Führung für die Körper durchsetzt ist, dadurch gekennzeichnet, daß die die Querschnitte der Öffnungen in der Führung (13) verstellbar sind.

2. Vorrichtung nach Anspruch 1, dadurch gekennzeichnet, daß die Führung (13) mit Ausschnitten (16, 17) versehene Wände (14, 15) aufweist und ein verstellbarer Schieber (18) zum teilweisen Abdecken der Ausschnitte vorgesehen ist.

3. Vorrichtung nach Anspruch 2, dadurch gekennzeichnet, daß Ausschnitte (16, 17) der Führung (13) in Strömungsrichtung hintereinander angeordnet sind und der Schieber (18) eine Reihe gleichartiger Ausschnitte (21, 22) aufweist.

4. Vorrichtung nach Anspruch 2 oder 3, dadurch gekennzeichnet, daß die Ausschnitte (16, 17) auf einander gegenüberliegenden Seiten der Führung (13) vorgesehen sind und ein gemeinsamer Schieber (18) diese Seiten übergreift.

5. Vorrichtung nach einem der Ansprüche 1 bis 4, gekennzeichnet durch eine Verstellvorrichtung (23), deren Betätigungselement (24) an der Außenseite des Strahlapparats (1) angeordnet und über eine Abdichtung (26) mit dem Verstellmechanismus verbunden ist.

6. Vorrichtung nach einem der Ansprüche 2 bis 5, dadurch gekennzeichnet, daß der Schieber (18) mit einer Zahnstange (28) versehen und mittels eines Ritzels (27) verstellbar ist.
